# EUROPEAN PATENT APPLICATION

(11) **EP 1 236 596 A1**
(43) Date of publication of application: **04.09.2002**
(21) Application number: 02250579.6
(22) Date of filing: 29.01.2002
(51) Int. Cl.: B60H 1/32, B60P 3/20

(54) **Generator start up system for transport refrigeration system**

(30) Priority: 15.02.2001 US 784399
(71) Applicant: CARRIER CORPORATION, Syracuse New York 13221 (US)
(72) Inventor: Barrett, Kenneth B., Jamesville, New York 13078 (US); Wilson, James C., Cazenovia, New York 13035 (US); Chopko, Robert A., Baldwingsville, New York 13027 (US)
(74) Representative: Leckey, David Herbert

(57) **Abstract**

An all electric transport refrigeration system receives its compressor electric drive motor power and all other electrical power from a single on-board engine driven permanent magnet generator (300). A dual winding three phase electric motor (118) powers the compressor. The respective sets of windings (10, 20) of the motor (118) are energised in a predetermined sequence during start up. This results in a system that can use a smaller generator while at the same time achieves the start up torque necessary to operate the compressor (116).

## Description

### BACKGROUND OF THE INVENTION

This invention relates to an improved generator start up system design for use on an all electric truck trailer refrigeration system that receives its compressor drive motor power and all other electrical power from a single on-board engine driven generator. While the specifically disclosed generator is a permanent magnet generator, the invention may have application in other types of generators.

Transport refrigeration systems for a standardized truck trailer having on-board regulated power necessary to operate certain components such as system controls, motors and related devices are known in the art. Typically, the size of the equipment used in truck trailer refrigeration units is restricted to the limited space bounded by the tractor swing radius and the trailer front wall. In the prior art, such transport refrigeration applications have included an on-board, small power output generator or alternator and regulator apparatus which has been limited to providing power to a portion of the system power consuming apparatus, such as fan motors and system controls. On-board generators that are sufficiently large to simultaneously provide all the power needed by the transport refrigeration system, including the power to start and run a compressor drive motor, have typically been too large for the available space and further, would also be too heavy and too costly to consider for use in conventional transport refrigeration systems.

Generators that are small enough to meet the size and weight requirements are generally not configured to meet the overall transport refrigeration system start up and running power requirements.

Generators of sufficient power capability to fully power a truck trailer transport refrigeration system have been too large, too heavy, and too costly to meet on-board size and weight requirements. Therefore, it would be desirable to design a transport refrigeration system with a generator power system that may provide the entire motor and control system power for the system while at the same time meeting required space limitations.

European Patent Application EP-A-1046524 entitled "Transport Refrigeration Unit With Synchronous Generator Power System" and United States Patent 6,085,533 entitled "Method and Apparatus for Torque Control to Regulate Power Requirement at Start Up", relate to a somewhat compact, lightweight, all electric transport refrigeration system with on-board electrical power generating capacity which is capable of providing sufficient power to simultaneously supply the electrical requirements of the refrigeration system compressor motor as well as all other motor and electrical devices. While such a refrigeration system does not exceed the spatial boundaries presently imposed by more conventional transport refrigeration systems, it would never the less be desirable to design a transport refrigeration system with a generator that is very compact in design, while meeting on-board system start up and running power requirements. Further, a very compact generator design would result in a lighter weight and less costly transport refrigeration system.

One restriction on reducing the size of the generator is that sufficient power to start the compressor motor is necessary at start up.

One method of reducing necessary start up involves the use of a system unloader. As is well known in refrigerant compression, by unloading the load on compressor, start up torque can be reduced. This method has been utilized in the past. However, it would be desirable to provide further ways of reducing the start up torque.

### SUMMARY OF THE INVENTION

A transport refrigeration system is provided, which includes a compressor having a three phase electric compressor drive motor that utilizes a dual winding energizing system positioned within the compressor. One of the dual windings is a start winding. The dual windings allow the use of a smaller generator. The refrigeration system includes a condenser heat exchanger unit and an evaporator heat exchanger unit operatively coupled, respectively, to a compressor discharge port and a compressor suction port. At least one fan assembly having an electric fan motor is configured to provide air flow over at least one of the heat exchange units. The refrigeration system includes an integrally mounted unitary engine driven generator assembly, which is configured to the desired voltage at the desired frequency. The compressor drive motor and at least a fan motor are configured to be directly coupled to the generator.

The generator of the present invention assumes a relatively small profile and provides suitable start up and running power to the three phase electric compressor drive motor using a system having timely activated dual windings. In this system, a first winding is energized at start up. This provides a starting current that is less than 70% of the full starting current capacity of the three phase electric compressor motor. The motor torque, however, is enough to initially operate the three phase electric compressor motor at full speed. After a short time (in the preferred embodiment, one second), a second winding is also energized, thus providing full motor torque.

The unique features of the dual winding three phase electric motor energizing system as employed in the present invention results in a novel transport refrigeration system of reduced size, weight and ultimately, cost. The lower start current allows the use of a smaller generator. Compressor unloading may or may not be used with this invention.

These and other features of the present invention can be best understood from the following specification and drawings, the following of which is a brief description.

### BRIEF DESCRIPTION OF THE DRAWINGS

Figure 1 is a schematic diagram illustrating a trailer refrigeration system having a compressor with an integrated three phase electric drive motor having a dual winding energizing system in accordance with an embodiment of the present invention.
Figure 2 is a schematic diagram of a compressor drive motor having a dual winding start up system in accordance with an embodiment of the present invention.

### DETAILED DESCRIPTION OF A PREFERRED EMBODIMENT

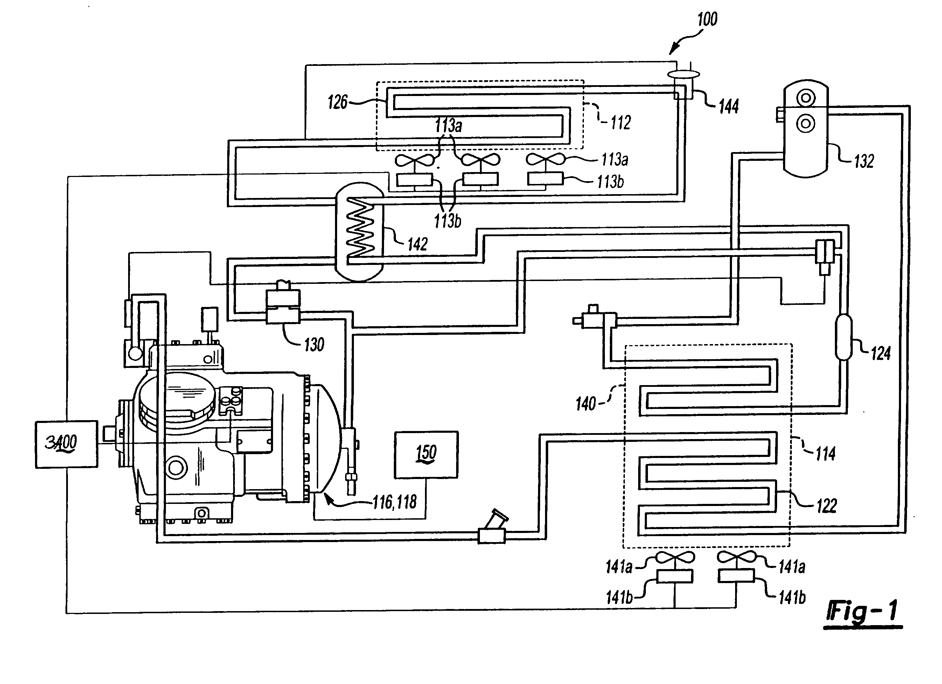

Referring to Figure 1, a trailer refrigeration system 100 is schematically illustrated with a compressor 116. The compressor 116 has the compressing mechanism, a three phase electric compressor drive motor 118 and an interconnecting drive shaft all sealed within a common housing. A suitably designed synchronous generator 300 is provided that is capable of fully powering the internal three phase electric motor 118 of the compressor utilizing a dual winding start up system 150 as well as satisfying all other electrical requirements of the system.

Operation of the refrigeration system 100 can best be understood by starting at the compressor 116, where the refrigerant enters the compressor and is compressed to a higher temperature and pressure. Refrigerant gas then moves into the air-cooled condenser 114. Air flowing across a group of condenser coil fins and tubes 122 cools the gas to its saturation temperature. The air flow across the condenser is energized by one or more condenser fans 141a powered by condenser fan motors 141b. By removing latent heat, the gas condenses to a high pressure/high temperature liquid and flows to a receiver 132 that provides storage for excess liquid refrigerant during low temperature operation. From the receiver 132, the liquid refrigerant passes through a subcooler heat exchanger 140, through a filter dryer 124 that keeps refrigerant cool and dry, then to a heat exchanger 142 that increases the refrigerant subcooling, and finally to a thermostatic expansion valve 144.

As the liquid refrigerant passes through the orifice of the expansion valve 144, some of it vaporizes into a gas. Return air from the refrigerated space flows over the heat transfer surface of the evaporator 112. As refrigerant flows through the tubes 126 in the evaporator 112, the remaining liquid refrigerant absorbs heat from the return air, and in so doing, is vaporized. The air flow across the evaporator is energized by one or more evaporator fans 113a powered by evaporator fan motors 113b. The vapor then flows through a suction modulation valve 130 back to the compressor 116. A thermostatic expansion valve bulb or sensor is preferably located on the evaporator outlet tube. The bulb is intended to control the thermostatic expansion valve, thereby controlling refrigerant super-heating at the evaporator outlet tubing. This is better described in the above-referenced prior applications, and forms no portion of this invention.

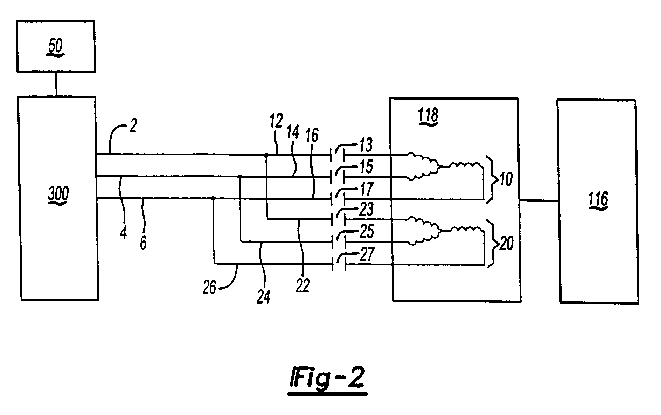

Figure 2 schematically illustrates a dual winding start up system 150 of the present invention. Generator 300 provides power to three phase compressor motor 118 which drives compressor 116. Generator 300 powers three phase compressor motor 118 by way of wire elements 2, 4, 6. Elements 2, 4, 6 each bifurcate into a first and second set of start windings 10, 20. First set of start windings 10 comprises wire elements 12, 14, 16 having start winding switches 13, 15, 17 respectively. Second set of start windings 20 comprises wire elements 22, 24, 26 having start winding switches 23, 25, 27 respectively. A switch control device 50 is provided to timely activate the sets of start windings 10, 20 in a predetermined sequence.

The wire elements, switches, etc. are shown schematically. Three phase motors having dual windings with a start winding are known. However, such systems have not been used in combination with a generator driven refrigerant compressor in a truck trailer refrigeration system.

During start up, the three phase compressor motor 118 operates as follows: switch control device 50 first activates the first set of switches 13, 15, 17 thus energizing first three phase start winding set 10. At this point, the starting current is less than 70% of the full motor starting current. The motor torque, however, is enough to drive the compressor motor 118 at full speed. Before additional system loading is imposed on the compressor, switch control device 50 is set to activate the second set of switches 23, 25, 27 thus energizing second three phase winding 20. In one embodiment, this may occur on the order of one second after energising the first three phase winding 10. At this point, full motor torque is provided. In this manner, suitable start up current of three phase compressor motor 118 is attained while at the same time the size, weight and cost of generator 300 is kept to a functional minimum.

It should be understood that although the present invention has been described as useful in transport refrigeration systems, those of skill in the art will readily understand and appreciate the present invention has substantial use and provides many benefits in other types of refrigeration systems as well.

It has been shown that the unique features of the timely activated dual winding three phase electric motor energizing system coupled with the appropriate compressive mechanism and driven by a suitably configured generator result in a transport refrigeration system that affords the desired size and weight, as well as cost, requirements while meeting overall transport refrigeration system power requirements.

While the preferred embodiment utilizes a permanent magnet generator, the present invention may well have application in systems utilizing other types of generators.

A preferred embodiment of this invention has been disclosed. However, a worker of ordinary skill in this art would recognize that certain modifications would come within the scope of this invention. For that reason, the following claims should be studied to determine the true scope and content of this invention.

## Claims

1. A transport refrigeration system comprising:
a compressor (116) having a three phase electric drive motor (118) disposed therein for operating said compressor;
a condenser heat exchanger unit (114) operatively coupled to said compressor (116);
an evaporator heat exchanger unit (112) operatively coupled to said compressor (116);
at least one fan assembly (113a, 141a) having at least one electric fan motor (113b, 141b) configured to provide air flow over one of said heat exchanger units (112, 114);
an integrally mounted unitary engine driven generator assembly (300) configured to directly energize said three phase compressor drive motor;
wherein said generator (300) energizes said three phase compressor drive motor (118) utilizing a dual winding three phase electric motor energizing system (150) such that the required start up torque of said three phase compressor drive motor (118) used to operate said compressor (116) is attained while concurrently maintaining required size and weight constraints of said generator.

2. A transport refrigeration system as recited in Claim 1, wherein:
said dual winding three phase electric motor energizing system (150) comprises a first set (10) of three phase start windings and a second set (20) of three phase windings whereby said first set (10) of three phase start windings and said second set (20) of three phase windings are timely activated with respect to each other with a switch control device (50) during start up of said compressor (116).

3. A transport refrigeration system as recited in Claim 2, wherein during start up of said compressor, said switch control device (50) activates said first set (10) of three phase start windings and then said second set (20) of three phase windings in a predetermined timed sequence.

4. A transport refrigeration system as recited in any preceding Claim , wherein said generator (300) is a permanent magnet generator.

5. A transport refrigeration system comprising:
a compressor (116) having a three phase electric drive motor (118);
a generator (300) for energising said drive motor (118);
said three phase electric motor (118) having a first set (10) of three phase start windings and a second set (20) of three phase windings;
said system further comprising switch means (50) for activating said respective sets of windings in a predetermined sequence.
